# EUROPEAN PATENT APPLICATION

(11) **EP 1 675 287 A1**
(43) Date of publication of application: **28.06.2006**
(21) Application number: 04030454.5
(22) Date of filing: 22.12.2004
(51) Int. Cl.: H04B 15/04

(54) **Managment of radio interferences in a device, method, and program product**

(71) Applicant: SIEMENS AKTIENGESELLSCHAFT, 80333 München (DE)
(72) Inventor: Ebrecht, Edgar, 14974 Ludwigsfelde (DE)

(57) **Abstract**

A device (10) comprises a receiver (145); a control unit (110); a connection bus (100) for connecting a peripheral device (131, 132) to the control unit (110), to memory (121), or to another peripheral device (132, 131); at least one peripheral device (131, 132) connected to the device (10) via the connection bus (100). The control unit (110) is adapted to disable the peripheral device (131, 132) for at least one predefined period (A, B) in a time frame (20) used by the receiver (145), if the receive quality (RX QR) or receive level (RX LR) of the receiver (145) is below a predefined limit.

## Description

### Field of the invention

The invention relates to management of interference in a device comprising a radio receiver and a peripheral device connected to the device through a connection bus.

### Background of the invention

In contrast to transmitter design where self-interference can usually at least to some extent be ignored, receiver self-interference tends easily to lead to a reduction of the receiver performance.

Depending on the energy of the self-interference and on the degree of coupling to the receiver (coupling factor), a consequence may be that the reception quality drops or that the bit-to-error ratio is drastically decreased. This is particularly the case when the signal received from the base station is weak. A connection may thus be lost earlier than would be the case without self-interference, which decreases the useable radius of a cell and therefore also reduces the performance of a cellular network wherein such receivers are used.

The amount of self-interference can increase when a synchronized connection bus is used in the device comprising the receiver, especially when the peripherals and other units are connected via a flat cable. An example of such a bus could be the connection bus between a remote camera controller and other peripherals, such as memory. As a result of interference, depending on the clock frequency of the peripheral device, the 2^{nd} or higher harmonics can overlap with the reception band. The harmonics, even when of a higher order, may contain enough energy to interfere with some channels when a very sensitive receiver is used.

It is known for GSM terminals that the 73rd harmonic of a 13 MHz quartz oscillator leads to reduced sensitivity of channel 70 (13.0 MHz * 73 = 949.0 MHz), for example.

So far this problem has been solved or at least minimized by way of hardware design. By design measures the source of interference can be positioned far away from the places where coupling of the source of the interference to the receiver would be at highest. Antenna or antenna socket are such sensitive places, for example.

In addition to this, a costly shielding of the source of the interference has in many cases been necessary, especially when the interfering signal is transmitted over air. By using connector filters a connector related spreading of higher harmonics can be avoided. Sometimes specially selected digital components are used, having a feature of not causing very steep signal edges when switching. By so doing, the energy of the harmonics can be reduced.

The GSM timeslot use is characterized by time frames that comprise successive transmitting, reception, and monitoring time slots. In a normal GSM time frame, such as that used for voice-calls, there are eight time slots. Two of these, i.e. those for reception and monitoring, are possibly endangered by self-interference. During the other six, the self-interference cannot cause any connection problems, totaling 75% of the time.

In order to reduce the reduction of sensitivity of the receiver, the sources of interference could be switched off during the receiver and monitoring time slots. Since some synchronization is necessary, and since e.g. possible register backups take some time, this would inevitably be involved with some delays. As a consequence, the share of enabled time of the disturbing functional units would be less than 75%.

### Summary of the invention

By using a device according to claim 1, a method according to claim 9, or a program product according to claim 15, the self-interference related performance degradation of a receiver can be reduced without sacrificing the performance of peripheral devices possibly interfering with the receiver.

The dependent claims describe other advantageous embodiments of the invention.

### Advantages of the invention

The performance of peripheral devices can be increased in comparison with the situation where they were disabled regardless of the criticality of the situation whenever the receiver is used.

By storing dependencies between disturbances caused by at least one of a plurality of peripheral devices and receive channel or receive band of the receiver, the peripheral devices can be disabled in a selective manner. This improves the overall performance since the peripheral devices not causing adverse interference to the receiver at the currently used channel or band must not be disabled.

### List of Figures

In the following, the invention is described in more detail by way of examples shown in the appended drawings in Figures 1 to 4, of which:
Figure 1 shows some components of a device adapted to carry out the invention;
Figure 2 illustrates the structure of a TDMA time frame used in a TDMA-capable cellular telephone;
Figure 3 illustrates synchronization between enable and disable times of a peripheral device during TDMA time frames; and
Figure 4 illustrates predefined dependencies between disturbances caused by peripheral devices and receive channel or receive band of a receiver.

### Detailed description

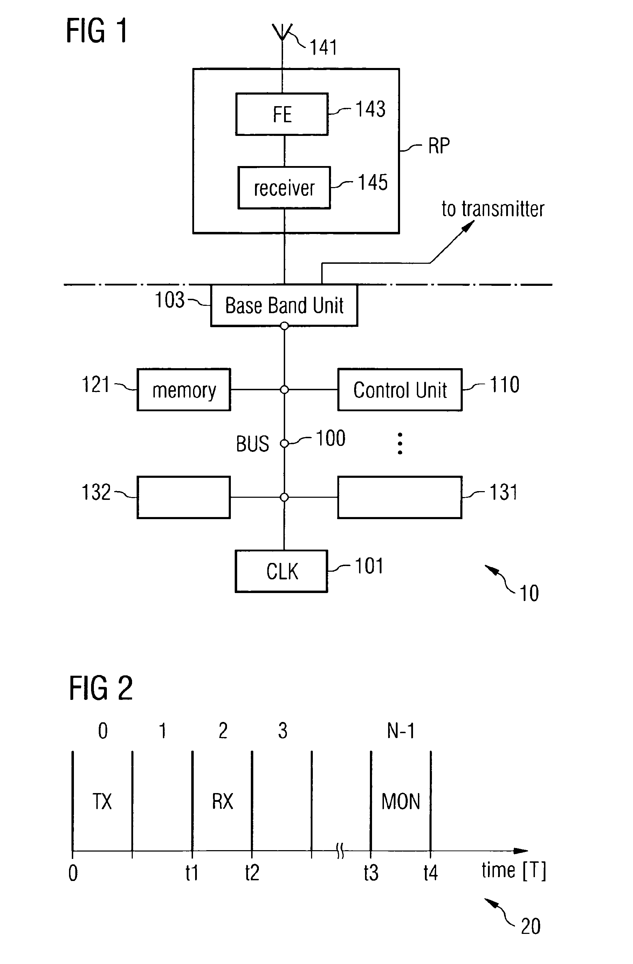

Figure 1 shows a cellular telephone 10 comprising, in addition to a radio part RP of which some components have been omitted, a timing clock 101, a control unit 110, such as a microprocessor or other processing unit, memory 121, and peripheral devices 131, 132. Peripheral devices 131, 132 may be any suitable devices that can be used for or with the cellular telephone 10. In particular, the peripheral devices 131, 132 may be camera units, tabletop chargers, audio input devices.

The radio part RP comprises an antenna 141, a front end part 143, a receiver 145, and a transmitter which has been omitted from Figure 1. The radio part RP is controlled by a base band unit 103 which usually comprises a microprocessor. A recent development trend has been towards supplying the radio part RP with a digital interface in which case the base band unit 103 could be omitted and some of its functions replaced by the control unit 110.

The peripheral devices 131, 132 are connected to the cellular telephone 10 via the communication bus 100.

Figure 2 illustrates the structure of a TDMA time frame 20 used in a TDMA-capable cellular telephone 10. In the transmit time slot TX, the transmitter of the cellular telephone 10 transmits. In the receive time slot RX the receiver 145 receives. In the monitor time slot MON, the receiver 145 listens to the channel and the control unit 110 prepares measurement reports for the use of the cellular telephone 10. The order in which the individual time slots are placed is selected by the cellular network.

When designing a cellular telephone 10 comprising a radio part RP, especially one capable of receiving Time Division Multiple Access signal, such as GSM signal, and at least one peripheral device 131, 132, such as a camera unit, we have observed that peripheral units 131, 132 tend to cause interference in the receiver 145. Tests performed on the issue have then shown that as long as the peripheral device 131, 132 was active, the harmonics of the signals on the connection bus 100 entered to the receiver 145 in the radio part RP leading to degradation of the receive quality. Particularly strong the interference coupling was when an unshielded cable, such as a flat cable, was used as part of the connection bus 100 cable. Using shielded cables could solve the problem but since such cables tend to be expensive, they would add the end cost of the device 10.

The interfering disturbances may couple to the receiver 145 by radiation, i.e. over air, especially through the antenna 141. This is particularly the case for higher frequency components mainly generated by signal edges. Harmonics can spread over the power supply or cross couple over lines. The connection bus 100 lines may couple to analog lines between the base band unit 103 and receiver 145 if they are close to each other. There may be also or direct capacitive coupling between the connection bus 100 and any of the analog components included in the device 10, such as connectors or capacitors. The energy may leak through the base band unit 103 directly into some of the analog components. Another possibility for the interfering disturbances to couple to the receiver 145 is through the power supply, or cross coupling between the connection bus 100 and analog lines in the radio part RP, or direct capacitive coupling. If a receiver with a digital interface were used, line (galvanic) coupling could be a problem.

In a cellular telephone 10, peripheral devices 131, 132 are assembled very close to the radio part RP. As a consequence of the better coupling, the amount of interference increases, leading to adverse effects.

Interference coupled over the connection bus 100 could be minimized by using line filters. This requires much effort, is costly, and the filters tend to consume much space.

Another possibility is to synchronize the operating of radio receiver 145 and the peripheral devices 131, 132. By avoiding signaling in the connection bus 100 during receive and monitor time slots RX, MON, interference would be reduced significantly, since there would be only static or preferably no signals from the peripheral devices 131, 132 in the connection bus 100. The control unit 110 is active all over the time, but it has been designed not to cause too much disturbing interference, partly benefiting from the fact that it is not located on any of the peripheral devices 131, 132.

The drawback of the solution as presented above is that if one always interrupts the signal transfer between peripheral devices 131, 132 and the control unit 110 during the receive-and the monitor slot, the effective transmission rate from the peripheral device 131, 132 is reduced. In the case the peripheral device 131, 132 being a camera, the transmission of picture data would be slowed down, deteriorating the performance of the camera. For a video picture, streaming transmission would cause the image to stutter.

According to one aspect of the invention, in order to minimize the performance degradation, two GSM system parameters can be used to selectively disable one or more of the peripheral devices 131, 132. Receive Level Report (RX LR) and Receive Quality Report (RX QR) are available for the control unit 145 whenever the receiver 145 is active. Both parameters depend on the circumstances of the connection between the cellular telephone 10 and base station. Some of these circumstances include line of sight, relative velocity between the cellular telephone 10 and base station, possible reflections, and multi-path propagation. The RX QR parameter is related to bit-to-error rate BER which depends on the total carrier to interference ratio (C/I) in the receiver 145, wherein contributions external- and internal to the cellular telephone 10 are accumulated.

A combination of both parameters results in three possible scenarios.

If RX QR shows that the receive quality is poor, the synchronized disabling of one or more peripheral devices 131, 132 should be applied because a additional decay of the C/I-ratio due to self interference must be prevented not to make the total C/I worse. The value of the RX QR parameter may obtain any value between 1 to 7, wherein 1 is "very good" and 7 is "very poor". Parameter value 4 could be used as decision threshold.

In the case of a high value of the RX LR parameter and a good value of the RX QR parameter, there is no direct need to disable the peripheral devices 131, 132 during RX or MON time slots.

If the value of the RX LR parameter is low but the value of the RX QR parameter shows that the quality is alright, e.g. above 4, the peripherals 131, 132 do not need to be interrupted.

In the main test case, a camera was used as the interfering peripheral device 131, 132. The principle described above can nevertheless applied to other kinds of peripheral units as well.

In other words, the method of disabling a peripheral device 131, 132 as described above is not used generally but only responsive to the receiving situation of the cellular telephone 10. The effects of self-interference on the receive quality begins only when the field strength of the received signal falls below a predefined limit on the channel used, such as in weak network conditions, or by reduction of the RX quality because of multi-path reception.

By using indicators readily available in a GSM system, especially the RX level report and the RX quality report, in order to decide whether a peripheral device 131, 132 is disabled or not, the performance of the receiver 145 of the cellular telephone 10 is not degraded, and furthermore, the performance of the peripheral devices 131, 132 can be sustained at a reasonable level.

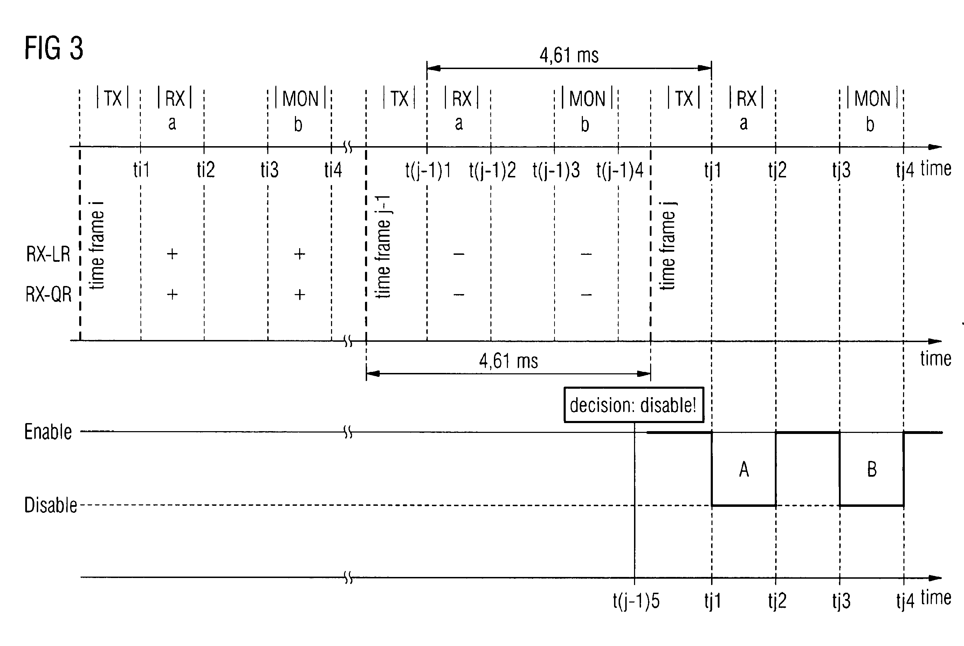

Figure 3 illustrates synchronization between enable and disable times of a peripheral device during TDMA time frames 20. For time frame i, the RX time slot begins at t=tᵢ₁ and ends at t=tᵢ₂. The MON time slot begins at t=tᵢ₃ and ends at t=tᵢ₄. For time frame j, the RX time slot begins at t=tⱼ₁ and ends at t=tⱼ₂. The MON time slot begins at t=tⱼ₃ and ends at t=tⱼ₄. The time slots in time frame j-1 have been labeled in a similar manner.

During time frame i, the GSM system parameters RX LR and RX QR are above the predefined threshold. Therefore the peripheral devices 131, 132 are not disabled.

The control unit 110 detects that the GSM system parameters RX LR and RX QR obtained for time frame j-1 are below a predefined threshold. Therefore it disables the peripheral devices 131, 132. To effect this, the control unit 110 sends at t=tⱼ₁ a disable signal to the peripheral devices 131, 132 that are to be disabled, and at t=tⱼ₂ an enable signal to the same peripheral devices 131, 132. The control unit 110 may repeat these operations at t=tⱼ₃ and at tⱼ₄, respectively. As a result, the peripheral devices 131, 132 are disabled during periods A and B of time for each time frame. The periods A and B of time are preferably synchronized with respective receive and measure times a, b of the receiver 145.

The control unit 110 stores register values of the peripheral devices 131, 132 when they are disabled and returns the register values to the peripheral devices 131, 132 when they are enabled.

The collecting and evaluation of the RX QR and RX LR takes some time. Therefore t=t₍ⱼ₋₁₎₅ is the earliest point when the control unit 110 can decide to perform the disable/enable operations. Even though the peripheral devices can be disabled for the remaining RX or MON time slots in the time frame j-1, a preferable solution is to disable the peripheral devices 131, 132 only for the next time frame, i.e. time frame j.

A particularly advantageous way to implement the invention is to use software means. The software, when executed in the control unit 110, can especially in a GSM system working in time-division mode be adapted to selectively disable different peripheral devices 131, 132 for some predefined periods, especially for during receive and monitor time slots (RX, MON, respectively). The disabling can be so synchronized that receiver 145 and the source of the interference are not active at the same time when there is a higher risk of impairment of a connection due to self-interference.

Especially when the cellular telephone 10 comprises a plurality (i.e. at least two) of peripheral devices 131, 132, it may be advantageous not to disable all of them whenever a critical receive condition is encountered.

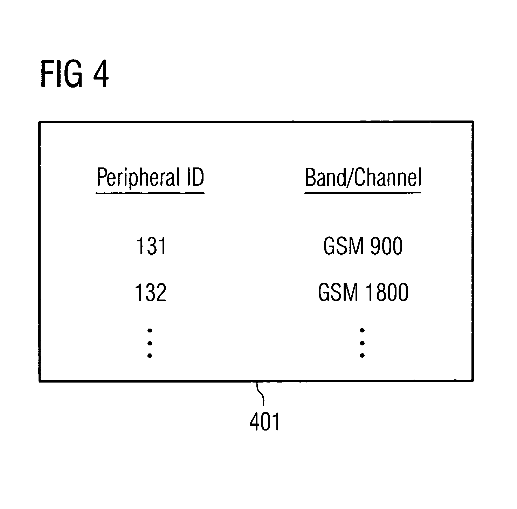

Figure 4 illustrates a list of stored dependencies 401 between disturbances caused by at least one peripheral device 131, 132 of a plurality of peripheral devices, and channel or band of the receiver 145. A peripheral device 131, 132 may have the characteristics of causing too much interference for a first received radio band or channel only (in the example GSM 900) whereas peripheral device 132 would cause an adverse magnitude of interference for another received radio band or channel only (in the example GSM 1800). If this dependency is stored in the memory 121 so that the control unit 110 has access to the data, the control unit may be used to selectively disable the peripheral device 131, 132, that causes adverse interference for the current band or channel of the receiver 145.

Furthermore, the cellular telephone 10 may be adapted to generate or update a list comprising dependencies 401. If RX QR and RX LR parameters are compared before disabling a specific peripheral device 131, 132, and after disabling it, if the improvement in the RX QR or RX LR parameter is exceeds a predefined threshold, the peripheral device 131, 132 is probable to cause high interference and therefore it is added to the list 401 defining dependencies for interference caused by peripheral devices 131, 132. In the opposite case, the peripheral device 131, 132 may be removed from the list.

Even though the invention has been described using a cellular telephone as example of the device 10, the invention is by no means limited to this particular example but the device 10 may any device within the scope of any of the patent claims. The device should comprise at least one receiver. The receiver does not need to be a GSM radio receiver, but can be any suitable receiver using TDMA or TDD. Such receivers include receivers capable of operating in GPRS, UMTS, EDGE radio networks. Examples of suitable devices include in addition to cellular or mobile phones also different kinds of portable digital assistants, stationary computers and laptops.

## Claims

1. A device (10) comprising:
- a receiver (145);
- a control unit (110);
- a connection bus (100) for connecting a peripheral device (131, 132) to the control unit (110), to memory (121), or to another peripheral device (132, 131);
- at least one peripheral device (131, 132) connected to the device (10) via the connection bus (100);
**characterized in that**: the control unit (110) is adapted to disable the peripheral device (131, 132) for at least one predefined period (A, B) in a time frame (20) used by the receiver (145), if the receive quality (RX QR) or receive level (RX LR) of the receiver (145) is below a predefined limit.

2. A device (10) according to claim 1, **wherein:** the control unit (110) is further adapted to enable the disabled peripheral device (131, 132) after the predefined period (A, B) has lapsed.

3. A device (10) according claim 1 or 2, further **comprising:**
means (110) adapted to select the peripheral device (131, 132) to be disabled from a plurality of peripheral devices (131, 132) by using stored dependencies (401) between disturbances caused by at least one of a plurality of peripheral devices (131, 132) and receive channel or receive band of the receiver (145).

4. A device (10) of claim 3, further **comprising:** means (110) adapted to generate or update said dependencies (401).

5. A device (10) according to any one of the preceding claims, **wherein:** two of the predefined periods (A, B) are synchronized with receive and measure times (a, b) of the receiver (145).

6. A device (10) according to any one of the preceding claims, wherein: the peripheral device (131, 132) is a camera.

7. A device (10) according to any one of the preceding claims, wherein: the connection bus (100) comprises an unshielded cable or connector.

8. A device (10) according to any one of the preceding claims, wherein: said device (10) is a cellular telephone capable of receiving Time Division Multiple Access signal, especially a GSM-capable cellular telephone.

9. A method to be performed in a device (10), comprising the steps of:
- comparing the receive quality (RX QR) or the receive level (RX LR) of a receiver (145) of the device (10) with a predefined limit; and
- disabling for at least one predefined period (A, B) in a time frame used by the receiver (145) a peripheral device (131, 132) comprised in or connected to the device (10) via a connection bus (100), if the comparison shows that the receive quality (RX QE) or the receive level (RX LR) of the receiver (145) is below the predefined limit.

10. A method according to claim 9, further comprising the step of: enabling the disabled peripheral device (131, 132) after the predefined period (A, B) has lapsed.

11. A method according to claim 9 or 10, further comprising the step of: selecting a peripheral device (131, 132) to be disabled by using stored dependencies (401) between disturbances caused by at least one of a plurality of peripheral devices (131, 132) and receive channel or receive band of the receiver (145).

12. A method according to any one of claims 9 to 11, wherein: two of the predefined periods (A, B) are synchronized with receive and measure times (a, b) of the receiver (145).

13. A method according to any one of claims 9 to 12, wherein: the peripheral device (131, 132) is a camera.

14. A method according to any one of claims 9 to 13, wherein: the connection bus (100) is a flat cable.

15. Program product to be executed in a control unit (10), comprising: software means adapted, when executed in the control unit (10), to carry out the method steps of any one of claims 9 to 14.
